(19) **Europäisches Patentamt / European Patent Office / Office européen des brevets**

(11) **EP 4 700 429 A1**

(12) **EUROPEAN PATENT APPLICATION**
published in accordance with Art. 153(4) EPC

(43) Date of publication:
**25.02.2026   Bulletin 2026/09**

(21) Application number: **23936998.6**

(22) Date of filing: **16.05.2023**

(51) International Patent Classification (IPC):
**G01S 7/484** (2006.01)

(52) Cooperative Patent Classification (CPC):
**G01S 7/484**

(86) International application number:
**PCT/CN2023/094627**

(87) International publication number:
**WO 2024/234314 (21.11.2024 Gazette 2024/47)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Shenzhen Yinwang Intelligent
Technologies Co., Ltd.
Shenzhen, Guangdong 518110 (CN)**

(72) Inventors:
• **WANG, Yi
  Shenzhen, Guangdong 518129 (CN)**

• **HONG, Yu
  Shenzhen, Guangdong 518129 (CN)**
• **QIU, Sunjie
  Shenzhen, Guangdong 518129 (CN)**
• **WANG, Shuai
  Shenzhen, Guangdong 518129 (CN)**
• **CHEN, Mo
  Shenzhen, Guangdong 518129 (CN)**

(74) Representative: **Gill Jennings & Every LLP
The Broadgate Tower
20 Primrose Street
London EC2A 2ES (GB)**

(54) **LASER EMITTING APPARATUS, LIDAR, AND LIDAR CONTROL METHOD**

(57)      A laser emitting apparatus (310), a lidar (300), and a method for controlling a lidar (300) are provided, and may be applied to the field of laser technologies. The laser emitting apparatus (310) of the lidar (300) includes a first emitting module (3101) and a second emitting module (3102), a plurality of light spots generated when each emitting module emits a laser beam are discontinuous, and light spots generated when the first emitting module (3101) and the second emitting module (3102) emit laser beams alternate with each other. In the control method, the lidar (300) may determine target point cloud data based on a first point cloud data set and a second point cloud data set, where the first point cloud data set and the second point cloud data set are respectively point cloud data sets obtained by emitting laser light by the first emitting module (3101) and the second emitting module (3102); and then generate a target point cloud map based on the target point cloud data. Because each piece of point cloud data in the target point cloud data includes real image information, accuracy of object information measured by the lidar can be improved.

Lidar 300

| Laser emitting apparatus 310 | | Control unit 350 | Laser receiving module 320 |
| --- | --- | --- | --- |
| First emitting module 3101 | | | Signal processing unit 330 |
| Second emitting module 3102 | | | Sensor system 340 |
| Optical module 3103 | | | |

FIG. 3

**Description**

**TECHNICAL FIELD**

This application relates to the field of laser technologies, and in particular, to a laser emitting apparatus, a lidar, and a method for controlling a lidar.

**BACKGROUND**

A lidar is configured to emit a laser beam, receive a laser beam (namely, an echo) reflected from an object after the laser beam is irradiated to the object, and measure related information of the object based on the echo, for example, a distance between the object and the lidar.

However, when the lidar is used to measure the related information of the object, accuracy of the measured object information is usually not high. For example, the distance that is between the object and the lidar and that is obtained by the lidar through measurement differs greatly from an actual distance.

**SUMMARY**

This application provides a laser emitting apparatus, a lidar, and a method for controlling a lidar, to resolve a problem that accuracy of object information measured by a lidar is not high in the conventional technology.

According to a first aspect, this application provides a laser emitting apparatus. The laser emitting apparatus may be used in a lidar. The laser emitting apparatus may include a first emitting module and a second emitting module. The first emitting module is configured to generate a first light spot when emitting a laser beam in a first time period, and the second emitting module is configured to generate a second light spot when emitting a laser beam in a second time period. The first time period and the second time period are different time periods. The first light spot is a discontinuous light spot, and the second light spot is a discontinuous light spot. The first light spot and the second light spot form a continuous light spot.

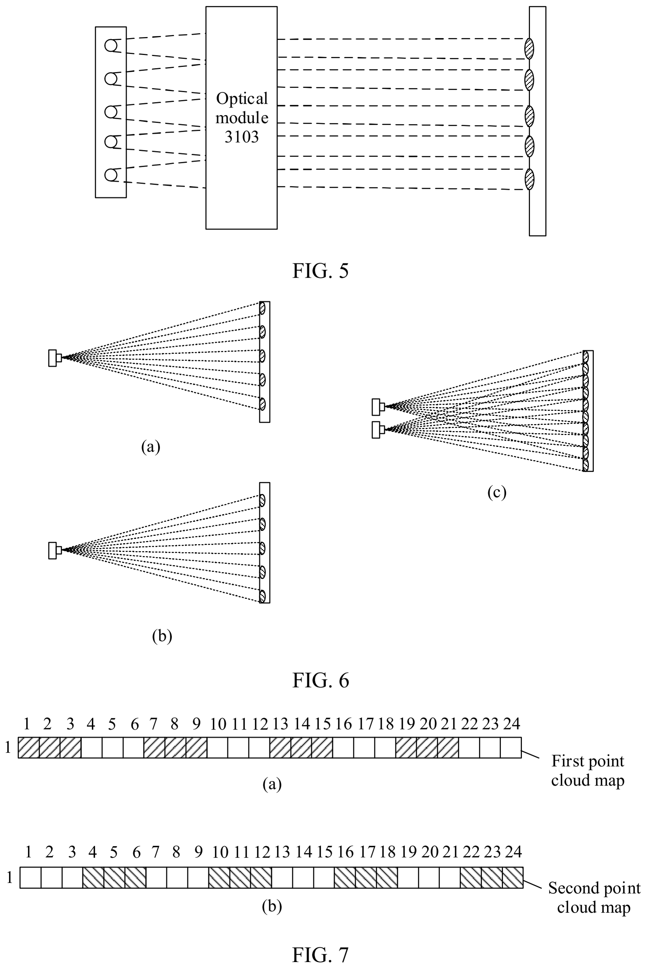

In an example, the light spot generated after the first emitting module emits the laser beam may be shown in (a) in FIG. 6.

In an example, the light spot generated after the second emitting module emits the laser beam may be shown in (b) in FIG. 6.

The first emitting module and the second emitting module emit laser beams at different time, so that a laser receiving module in the lidar can stagger receiving of an echo of the first light spot and an echo of the second light spot. In this way, whether the echo of the first light spot is subject to crosstalk of the echo of the second light spot can be identified in a piece of time. This helps improve accuracy of object information measured by the lidar.

In addition, light spots generated when each emitting module emits a laser beam are discontinuous, so that each echo received by the laser receiving module in the lidar is also discontinuous. In this way, it can be determined, based on a coverage area of each echo of the first light spot, whether an echo of the first light spot is subject to crosstalk of another echo of the first light spot, and it can be determined, based on a coverage area of each echo of the second light spot, whether an echo of the second light spot is subject to crosstalk of another echo of the second light spot. This helps improve accuracy of object information measured by the lidar.

In some possible implementations, the first emitting module includes one or more laser arrays, and each laser array in the first emitting module includes one or more array elements; and the second emitting module includes one or more laser arrays, and each laser array in the second emitting module includes one or more array elements.

In other words, the laser emitting apparatus may include a plurality of laser arrays, light spots generated by a laser beam emitted by each laser array are discontinuous, and laser beams emitted by the plurality of laser arrays in the laser emitting apparatus may form continuous light spots.

In some possible implementations, the first light spot is a plurality of discontinuous point light spots or line light spots, and the second light spot is a plurality of discontinuous point light spots or line light spots.

In some possible implementations, the plurality of point light spots or line light spots in the first light spot are generated when different array elements in the first emitting module emit laser beams; and the plurality of point light spots or line light spots in the second light spot are generated when different laser array elements in the second emitting module emit laser beams.

In the method, the plurality of point light spots or line light spots in the first light spot are generated when different array elements in the first emitting module emit laser beams, so that after the laser receiving module receives a plurality of discontinuous echoes of the first light spot, a point light spot or line light spot corresponding to each echo may be determined based on the echoes of the first light spot. This helps identify whether each echo is subject to crosstalk of another echo, and helps improve accuracy of object information measured by the lidar.

In some possible implementations, the second light spot is located in an interval in the first light spot.

The second light spot is located in the interval in the first light spot, so that the echoes of the first light spot and echoes of the second light spot that are received by the laser receiving module alternate with each other. This helps identify whether the echoes of the first light spot are subject to crosstalk of the echoes of the second light spot, helps identify whether the echoes of the second light spot are subject to crosstalk of the echoes of the first light spot, and helps improve accuracy of object information measured by the lidar.

In some possible implementations, the first emitting module emits a first laser beam and a second laser beam, and a light spot generated by the first laser beam and a light spot generated by the second laser beam are discontinuous. The second emitting module emits a third laser beam and a fourth laser beam, and a light spot generated by the third laser beam and a light spot generated by the fourth laser beam are discontinuous. The light spot generated by the third laser beam is located in an interval area between the light spot generated by the first laser beam and the light spot generated by the second laser beam, and the light spot generated by the second laser beam is located in an interval area between the light spot generated by the third laser beam and the light spot generated by the fourth laser beam.

In some possible implementations, the laser emitting apparatus further includes an optical module, the optical module is configured to process laser beams emitted by the first emitting module into discontinuous light spots, and the optical module is further configured to process laser beams emitted by the second emitting module into discontinuous light spots.

In the method, through the optical module, the first light spot may be discontinuous, and the second light spot may be discontinuous. This helps determine whether an echo of the first light spot and an echo of the second light spot are subject to crosstalk, and helps improve accuracy of object information measured by the lidar.

In some possible implementations, there is a first offset between an optical axis of the first emitting module and an optical axis of the second emitting module.

The optical axis of the first emitting module may be equivalent to an axis of symmetry of the first emitting module, and the optical axis is parallel to a direction in which the first emitting module emits the laser beam.

The optical axis of the second emitting module may be equivalent to an axis of symmetry of the second emitting module, and the optical axis is parallel to a direction in which the second emitting module emits the laser beam.

There is a first offset between the optical axis of the first emitting module and the optical axis of the second emitting module, so that there may also be a distance difference between a location of the light spot generated by the first emitting module and a location of the light spot generated by the second emitting module. In this way, the light spot generated by the first emitting module and the light spot generated by the second emitting module can be prevented from overlapping. This helps the light spots generated by the first emitting module and the light spots generated by the second emitting module alternate with each other.

In some possible implementations, there is a first offset between a center of the laser array of the first emitting module and a center of the laser array of the second emitting module.

There is a first offset between the center of the laser array of the first emitting module and the center of the laser array of the second emitting module, so that there may also be a distance difference between a location of the light spot generated by the first emitting module and a location of the light spot generated by the second emitting module. In this way, the light spot generated by the first emitting module and the light spot generated by the second emitting module can be prevented from overlapping. This helps the light spots generated by the first emitting module and the light spots generated by the second emitting module alternate with each other.

According to a second aspect, this application provides a lidar. The lidar may include the laser emitting apparatus in the first aspect and a laser receiving apparatus.

The laser receiving module is configured to receive an echo and determine echo information based on the received echo, where the echo information is used to generate a point cloud data set, the point cloud data set includes a plurality of pieces of point cloud data, each of the plurality of pieces of point cloud data includes distance information and light intensity information, the distance information indicates a distance between a spatial point and the lidar, and the light intensity information indicates a light intensity of the echo. The laser receiving module is further configured to send the echo information

In the method, the echo information may be used to generate the point cloud data set, the point cloud data set includes the plurality of pieces of point cloud data, and each piece of point cloud data may correspond to one spatial point. The point cloud data may include information such as a distance from the spatial point to the lidar, a laser intensity at the spatial point, and location coordinates of the spatial point. Each piece of point cloud data may correspond to one pixel in a point cloud map.

For each emitting module, a coverage area of a laser beam emitted by the emitting module may be referred to as an ideal lighting area of the laser beam, and an area that cannot be covered by the laser beam may be referred to as an ideal non-lighting area.

Because a coverage area of each laser beam emitted by each emitting module is known, it may be determined, based on location coordinates of each piece of point cloud data, whether the point cloud data is located in an ideal lighting area of the laser beam or an ideal non-lighting area of the laser beam. The ideal lighting area and the ideal non-lighting area are used to help determine whether the point cloud data is crosstalk data, and help improve accuracy of measuring object information by the lidar.

According to a third aspect, this application provides a method for controlling a lidar. The lidar may include the lidar in the second aspect.

The method for controlling a lidar may include: obtaining to-be-processed point cloud data, where the to-be-processed point cloud data includes a first distance and a first light intensity, the first distance is a distance between a first spatial point and the lidar, the first distance is determined based on time at which the first emitting module in the laser emitting apparatus emits a second laser beam and time at which the laser receiving module receives a first echo, the first light intensity is a light intensity of the first echo, and the first spatial point is located in a light spot of the second laser beam; obtaining related point cloud data, where the related point cloud data includes first adjacent point cloud data, the first adjacent point cloud data includes a second distance and a second light intensity, the second distance is a distance between a second spatial point and the lidar, the second distance is determined based on sending time of the second laser beam and time at which the laser receiving module receives a second echo, the second light intensity is a light intensity of the second echo, and the second spatial point is located in a light spot of a third laser beam; and determining a target point cloud data set of the lidar based on the to-be-processed point cloud data and the related point cloud data, where when a difference between the first light intensity and an estimated crosstalk light intensity is less than or equal to a light intensity threshold, the target point cloud data set does not include the to-be-processed point cloud data, and the estimated crosstalk light intensity is associated with the first distance, the first light intensity, the light intensity in the related point cloud data, and the distance in the related point cloud data.

In an example, the to-be-processed point cloud data may correspond to an 8th grid in a first point cloud map shown in FIG. 7. An area of a location indicated by the to-be-processed point cloud data is a first ideal lighting area.

An area of a location indicated by the first adjacent point cloud data is a first ideal non-lighting area, and the first ideal non-lighting area is adjacent to the first ideal lighting area.

FIG. 7 is used as an example. When the to-be-processed point cloud data corresponds to the 8th grid in the first point cloud map, the location indicated by the first adjacent point cloud data may be any one of grid 4, grid 5, grid 6, grid 10, grid 11, and grid 12 in the first point cloud map. For example, the location indicated by the first adjacent point cloud data may be grid 5 in the first point cloud map.

In the method, the second echo may include a crosstalk echo generated when the first emitting module emits the second laser beam. In this way, a quantity of crosstalk photons generated when the first emitting module emits the second laser beam may include the second light intensity, and the estimated crosstalk light intensity in the to-be-processed point cloud data may be obtained based on the second light intensity.

In the method, when the difference between the first light intensity and the estimated crosstalk light intensity is less than or equal to the light intensity threshold, it indicates that the light intensity in the to-be-processed point cloud data is caused by crosstalk, that is, the to-be-processed point cloud data does not include real image information. In this way, each piece of point cloud data in the target point cloud data set includes real image information, so that impact of crosstalk can be reduced, and accuracy of object information measured by the lidar can be improved.

In some possible implementations, the related point cloud data may further include second adjacent point cloud data, the second adjacent point cloud data includes a third distance and a third light intensity, the third distance is a distance between a third spatial point and the lidar, the third distance is determined based on the sending time of the second laser beam and time at which the laser receiving module receives a third echo, the third light intensity is a light intensity of the third echo, and the third spatial point is located in a light spot of a fourth laser beam.

An area at a location indicated by the second adjacent point cloud data is also a first ideal non-lighting area, and the first ideal non-lighting area corresponding to the second adjacent point cloud data is different from the first ideal non-lighting area corresponding to the first adjacent point cloud data.

FIG. 7 is used as an example. When the location indicated by the first adjacent point cloud data is grid 5 in the first point cloud map, the location indicated by the second adjacent point cloud data may be any one of grid 10, grid 11, and grid 12. For example, the location indicated by the second adjacent point cloud data may be grid 11.

In the method, the third echo may include a crosstalk echo generated when the first emitting module emits the second laser beam. In this way, a quantity of crosstalk photons generated when the first emitting module emits the second laser beam may further include the third light intensity, and the estimated crosstalk light intensity in the to-be-processed point cloud data may be obtained based on the third light intensity. This helps determine whether the to-be-processed point cloud data includes a real image.

In some possible implementations, the related point cloud data may further include crosstalk point cloud data, the crosstalk point cloud data includes a fourth distance and a fourth light intensity, the fourth distance is a distance between a fourth spatial point and the lidar, the fourth distance is determined based on sending time of the third laser beam and time at which the laser receiving module receives a fourth echo, the fourth light intensity is a light intensity of the fourth echo, and the fourth spatial point is located in the light spot of the second laser beam.

The area of the location indicated by the second adjacent point cloud data is a second ideal non-lighting area, and the second ideal non-lighting area overlaps the first ideal non-lighting area.

FIG. 7 is used as an example. When the to-be-processed point cloud data corresponds to grid 8 in the first point cloud map, point cloud data corresponding to one or more of grid 7, grid 8, and grid 9 in a second point cloud map may all be determined as the crosstalk point cloud data. For example, a location indicated by the crosstalk point cloud data may be grid 8 in the second point cloud map.

In the method, the fourth echo may include a crosstalk echo generated when the second emitting module emits the third laser beam. Because the fourth echo is formed based on the fourth spatial point, and the fourth spatial point is located in the light spot of the second laser beam, the quantity of photons obtained when the first emitting module emits the second laser beam may include the fourth light intensity, and the estimated crosstalk light intensity in the to-be-processed point cloud data may be obtained based on the fourth light intensity. This helps determine whether the to-be-processed point cloud data includes the real image.

In some possible implementations, that the estimated crosstalk light intensity is associated with the first distance, the first light intensity, the light intensity in the related point cloud data, and the distance in the related point cloud data includes: The estimated crosstalk light intensity is a weighted sum of light intensities in the related point cloud data, and a weight of the light intensity in the related point cloud data is associated with a difference between the distance in the related point cloud data and the first distance.

For example, a weight of a light intensity in any piece of adjacent point cloud data of the to-be-processed point cloud data may be determined based on two distances, one of the distances is a distance between a spatial point corresponding to the to-be-processed point cloud data and the lidar, and the other distance is a distance between a spatial point corresponding to the adjacent point cloud data and the lidar. A difference between the previous distance and the next distance is less than or equal to a distance threshold.

For example, the weight of the light intensity in the adjacent point cloud data of the to-be-processed point cloud data may be a ratio of the previous distance to the next distance.

Optionally, when the difference between the distance between the spatial point corresponding to the to-be-processed point cloud data and the lidar and the distance between the spatial point corresponding to the adjacent point cloud data and the lidar is greater than a preset distance threshold, the weight may be 0.

For example, a weight of a light intensity in any piece of crosstalk point cloud data of the to-be-processed point cloud data may also be determined based on two distances, one of the distances is the distance between the spatial point corresponding to the to-be-processed point cloud data and the lidar, and the other distance is a distance between a spatial point corresponding to the crosstalk point cloud data and the lidar. A difference between the previous distance and the next distance is less than or equal to a distance threshold.

For example, the weight of the light intensity in the crosstalk point cloud data of the to-be-processed point cloud data may be a ratio of the previous distance to the next distance.

Optionally, when the difference between the distance between the spatial point corresponding to the to-be-processed point cloud data and the lidar and the distance between the spatial point corresponding to the crosstalk point cloud data in the first point cloud data and the lidar is greater than a preset distance threshold, the weight may be 0.

In the method, after the weight of the light intensity in the related point cloud data is determined, the estimated crosstalk light intensity in the to-be-processed point cloud data may be obtained based on the weight of the light intensity in the related point cloud data, and then whether the to-be-processed point cloud data includes the real image may be determined based on the estimated crosstalk light intensity.

In some possible implementations, after the weight of the adjacent point cloud data and the weight of the crosstalk point cloud data (which may be referred to as a second light intensity weight) are determined, the weight of the adjacent point cloud data and the weight of the crosstalk point cloud data may be further normalized based on a first coordinate distance and a second coordinate distance, to obtain a normalized weight.

The first coordinate distance may be a distance between a corresponding coordinate location of the adjacent point cloud data in the first point cloud map and a corresponding coordinate location of the to-be-processed point cloud data in the first point cloud map. The second coordinate distance may be a distance between a corresponding coordinate location of the crosstalk point cloud data of the to-be-processed point cloud data in the second point cloud map and a corresponding coordinate location of adjacent point cloud data of the crosstalk point cloud data in the second point cloud map.

In some possible implementations, the estimated crosstalk light intensity and the light intensity in the related point cloud data satisfy the following formula:

$$\lambda^{/} = \varphi_1 \times \lambda_1 + \varphi_2 \times \lambda_2 + \omega \times \lambda_\omega,$$

where
$\lambda^{/}$ indicates the estimated crosstalk light intensity, $\varphi_1$ indicates a weight of the light intensity in the first adjacent point cloud

data, $\lambda_1$ indicates the second light intensity, $\varphi_2$ indicates a weight of the light intensity in the second adjacent point cloud data, $\lambda_2$ indicates the third light intensity, $\omega$ indicates a weight of the light intensity in the crosstalk point cloud data, and $\lambda_\omega$ indicates the fourth light intensity.

In the method, the estimated crosstalk light intensity is a quantity of photons of a crosstalk echo corresponding to the to-be-processed point cloud data, and whether the to-be-processed point cloud data includes real image information may be determined based on the estimated crosstalk light intensity. This helps improve accuracy of object information measured by the lidar.

In some possible implementations, the method may further include: controlling the first module in the laser emitting apparatus to emit the first laser beam and the second laser beam in a first time period; controlling the second module in the laser emitting apparatus to emit the third laser beam and the fourth laser beam in a second time period; and controlling the laser receiving module to receive a laser beam.

Obtaining the to-be-processed point cloud data and obtaining the related point cloud data may include: receiving echo information, where the echo information is determined by the laser receiving module based on the received echo, the echo information is used to generate a point cloud data set, and the point cloud data set includes a plurality of pieces of point cloud data; and obtaining the to-be-processed point cloud data and the related point cloud data from the plurality of pieces of point cloud data.

In the method, the first emitting module and the second emitting module emit laser beams in different time periods, so that after emitting a laser beam, the first emitting module may determine, based on a laser beam received by the laser receiving module, whether the received laser beam includes a crosstalk echo of to-be-processed point cloud data in the first emitting module. This helps obtain an estimated crosstalk light intensity in the to-be-processed point cloud data, and further helps determine whether the to-be-processed point cloud data includes the real image information.

In addition, after emitting a laser beam, the second emitting module may determine, based on a laser beam received by the laser receiving module, whether the received laser beam includes a crosstalk echo of to-be-processed point cloud data in the second emitting module. This helps obtain an estimated crosstalk light intensity in the to-be-processed point cloud data, and further helps determine whether the to-be-processed point cloud data includes the real image information.

According to a fourth aspect, this application provides an apparatus for controlling a lidar. For beneficial effect, refer to the descriptions of the third aspect. Details are not described herein again. The apparatus has a function of implementing the behavior in the method example in the third aspect. The function may be implemented by hardware, or may be implemented by hardware executing corresponding software. The hardware or software includes one or more modules corresponding to the foregoing function.

In a possible design, the apparatus includes an obtaining module and a determining module.

The obtaining module may be configured to obtain to-be-processed point cloud data, where the to-be-processed point cloud data includes a first distance and a first light intensity, the first distance is a distance between a first spatial point and the lidar, the first distance is determined based on time at which a first emitting module in a laser emitting apparatus emits a second laser beam and time at which a laser receiving module receives a first echo, the first light intensity is a light intensity of the first echo, and the first spatial point is located in a light spot of the second laser beam;

The obtaining module may be further configured to obtain related point cloud data, where the related point cloud data includes first adjacent point cloud data, the first adjacent point cloud data includes a second distance and a second light intensity, the second distance is a distance between a second spatial point and the lidar, the second distance is determined based on sending time of the second laser beam and time at which the laser receiving module receives a second echo, the second light intensity is a light intensity of the second echo, and the second spatial point is located in a light spot of a third laser beam.

The determining module may be configured to determine a target point cloud data set of the lidar based on the to-be-processed cloud data and the first adjacent point cloud data, where when a difference between the first light intensity and an estimated crosstalk light intensity is less than a light intensity threshold, the target point cloud data set does not include the to-be-processed point cloud data, and the estimated crosstalk light intensity is associated with the first distance, the first light intensity, the light intensity in the related point cloud data, and the distance in the related point cloud data.

Optionally, the apparatus may further include a control module.

The control module may be configured to control the first emitting module in the laser emitting apparatus to emit the first laser beam and the second laser beam in a first time period.

The control module may be further configured to control a second emitting module in the laser emitting apparatus to emit the third laser beam and a fourth laser beam in a second time period.

The control module may be further configured to control the laser receiving module to receive a laser beam.

Correspondingly, when the obtaining module is configured to obtain the to-be-processed point cloud data and obtain the related point cloud data, the obtaining module may be configured to obtain the to-be-processed point cloud data and the related point cloud data based on information about the laser received by the laser receiving module.

According to a fifth aspect, this application provides an apparatus for controlling a lidar. The apparatus includes a communication interface and a processor, and optionally, further includes a memory. The memory is configured to store a computer program or instructions. The processor is coupled to the memory and the communication interface. When the processor executes the computer program or the instructions, the apparatus is enabled to perform the method performed by the terminal device in the foregoing method embodiments.

According to a sixth aspect, this application provides a computer-readable storage medium. The computer-readable medium stores program code executed by a control apparatus, and the program code includes instructions used to implement the method in the third aspect.

According to a seventh aspect, this application provides a computer program product including instructions. When the computer program product is run on a control apparatus, the control apparatus is enabled to implement the method in the third aspect.

It may be understood that for effect that can be obtained in the fourth aspect to the seventh aspect, refer to the descriptions in the second aspect. Details are not described herein again.

## BRIEF DESCRIPTION OF DRAWINGS

FIG. 1 is a diagram of a lidar;
FIG. 2 is a diagram of a light spot formed when a laser beam emitted by an emitting module is irradiated onto an object;
FIG. 3 is a diagram of a structure of a lidar 300 according to an embodiment of this application;
FIG. 4 is a diagram of a structure of an optical module 3103 according to an embodiment of this application;
FIG. 5 is a diagram of a light spot obtained when a laser beam emitted by a first emitting module 3101 is irradiated onto an object according to an embodiment of this application;
FIG. 6 is a diagram of a location of a light spot formed when a lidar 300 irradiates an object according to an embodiment of this application;
FIG. 7 is a diagram of a first point cloud map and a second point cloud map according to an embodiment of this application;
FIG. 8 is a diagram of a method for controlling a lidar 300 according to an embodiment of this application;
FIG. 9 is a diagram of a structure of an apparatus for controlling a lidar according to an embodiment of this application; and
FIG. 10 is a diagram of a structure of an apparatus for controlling a lidar according to another embodiment of this application.

## DESCRIPTION OF EMBODIMENTS

The following describes the technical solutions in embodiments of this application with reference to the accompanying drawings in embodiments of this application.

To clearly describe the technical solutions in embodiments of this application, terms such as "first" and "second" are used in embodiments of this application to distinguish between same items or similar items that provide basically same functions or purposes. For example, first information and second information are merely used to distinguish between different information, and do not limit a sequence of the first information and the second information. A person skilled in the art may understand that the terms such as "first" and "second" do not limit a quantity and an execution sequence, and the terms such as "first" and "second" do not indicate a definite difference.

In embodiments of this application, "at least one" means one or more, and "a plurality of" means two or more. The term "and/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between associated objects. "At least one of the following items (pieces)" or a similar expression thereof indicates any combination of these items, including a single item (piece) or any combination of a plurality of items (pieces). For example, at least one item (piece) of a, b, or c may indicate a, b, c, a and b, a and c, b and c, or a, b, and c, where a, b, and c each may be singular or plural.

A lidar may be used in a plurality of scenarios, for example, may be used in scenarios such as surveying and mapping, remote sensing, self-driving, an uncrewed aerial vehicle, robot navigation, and marine scientific research.

There are many types of lidars. For example, based on a carrier platform, the lidar may include a handheld lidar, a ground fixed lidar, a vehicle-mounted mobile lidar, an airborne lidar, a shipborne lidar, a spaceborne lidar, and the like.

Based on a transmit waveform of the laser, the lidar may include a pulse lidar, a continuous wave lidar, and a hybrid lidar.

Based on a laser medium, the lidar may include an all-solid-state lidar, a gas lidar, a semiconductor lidar, and a diode-pumped solid-state lidar.

Based on a laser band, the lidar may include an ultraviolet lidar, a visible light lidar, and an infrared lidar.

The technical solutions of this application are applicable to any one of the foregoing lidars, and are particularly applicable to an all-solid-state lidar.

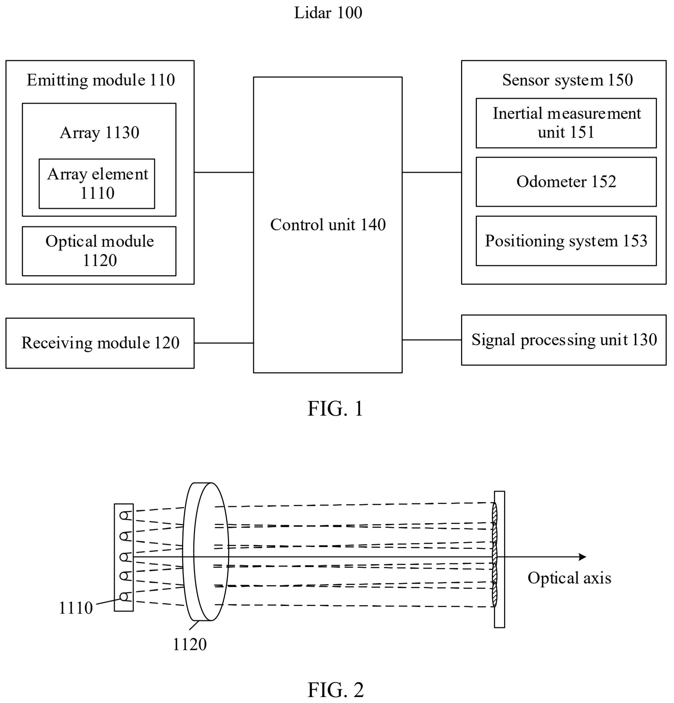

FIG. 1 is a diagram of a system structure of a lidar. As shown in FIG. 1, the lidar 100 includes an emitting module 110, a receiving module 120, a signal processing unit 130, and a control unit 140. The emitting module 110 includes an array 1130 and an optical module 1120. The array 1130 may include at least one array element 1110.

The array element 1110 is a component that emits a laser beam. For example, the array element 1110 may be a laser exciter.

The optical module 1120 is configured to collimate a light beam irradiated onto the optical module 1120, that is, adjust a divergence angle of the received light beam, and output a light beam obtained after the divergence angle is adjusted. The optical module 1120 may include one or more optical lenses. For ease of description, in subsequent content, light obtained through collimation of the optical module is referred to as collimated light.

In the emitting module 110 in this embodiment, locations of the array element 1110 and the optical module 1120 should meet the following conditions: A laser beam emitted by the array element 1110 can be irradiated onto the optical module 1120, and the divergence angle of the collimated light output by the optical module 1120 is less than a divergence angle of the laser beam irradiated onto the optical module.

After the laser beam emitted by the emitting module 110 is irradiated onto an object, a light spot is formed on the object. FIG. 2 is a diagram of a light spot formed when a laser beam emitted by an emitting module is irradiated onto an object.

As shown in FIG. 2, after the laser beam emitted by the array element 1110 passes through the optical module 1120, collimated light with a small divergence angle is formed. After laser beams emitted by a plurality of array elements 1110 are irradiated onto an object through the optical module 1120, a plurality of continuous light spots are generated. The plurality of continuous light spots herein may be understood as that two light spots generated when laser beams emitted by at least two adjacent array elements 1110 are irradiated onto the object through the optical module 1120 at least partially overlap.

An echo is generated after the collimated light output by the optical module 1120 is irradiated onto the object.

The receiving module 120 is configured to receive a laser beam and process the received laser beam, for example, perform optical filtering and/or optical-to-electrical conversion. The laser beam received by the receiving module 120 includes an echo generated after the collimated light output by the optical module 1120 is irradiated onto the object.

The receiving module 120 may determine echo information based on the received laser beam, for example, determine receiving time of the laser beam and an intensity of the received laser beam.

After determining the echo information, the receiving module 120 may further send the echo information to the signal processing unit 130.

For ease of description, in subsequent content, the receiving time at which the receiving module 120 receives the laser beam is referred to as echo time, and the intensity of the laser beam received by the receiving module 120 is referred to as an echo intensity.

Optionally, the receiving module 120 may further determine, based on time at which the emitting module 110 emits the laser beam and the time at which the receiving module 120 receives the laser beam, a distance between the lidar and a location at which the laser beam emitted by the emitting module 110 is irradiated onto the object. For ease of description, in subsequent content, the distance between the lidar and the location at which the laser beam emitted by the emitting module 110 is irradiated onto the object is referred to as an echo distance.

After determining the echo distance, the receiving module 120 may further send the echo distance to the signal processing unit 130.

Optionally, the lidar 100 may include a sensor system 150. The sensor system 150 may include several sensors that sense environment information of the lidar 100 and location information of the lidar 100. For example, the sensor system may include an inertial measurement unit (inertial measurement unit, IMU) 151, an odometer (DMI) 152, and a positioning system 153.

The IMU may be configured to sense location and orientation changes of the lidar 100 based on an inertial acceleration. In some examples, the IMU may be a combination of an accelerometer and a gyroscope. The DMI may be configured to estimate a location and an orientation of the lidar 100. The positioning system 153 may be configured to estimate a geographic location of the lidar 100. In some embodiments, the positioning system may be a global positioning system (global positioning system, GPS), a BeiDou system, or another positioning system.

After obtaining the environment information and the location information of the lidar 100, the sensor system may send the environment information and the location information to the signal processing unit 130.

The signal processing unit 130 is configured to generate a point cloud data set based on the echo information output by the receiving module 120 and the environment information and the location information that are output by the sensor system 150, where the point cloud data set includes a plurality of pieces of point cloud data, each piece of point cloud data may include intensity information of an echo generated when a laser beam sent by the emitting module 110 is irradiated onto the object, information about duration from emitting the laser beam by the emitting module 110 to receiving the laser beam by the receiving module 120, the echo distance, coordinate information, and the like.

Optionally, the echo distance may alternatively be determined by the signal processing unit 130 based on the time at which the emitting module 110 emits the laser beam and the time at which the receiving module 120 receives the laser beam.

For a method for generating, by the signal processing unit 130, the point cloud data set based on the echo information, the environment information, and the location information, refer to the conventional technology. Details are not described herein.

The control unit 140 is configured to control the emitting module 110, the receiving module 120, the signal processing unit 130, and the sensor system to perform related operations.

In a process of using the lidar 100, it is found that a problem like crosstalk often occurs in a point cloud map generated by the lidar 100. Consequently, a measurement result of the lidar is inaccurate, and a series of related problems are caused. For example, a vehicle-mounted lidar may cause a vehicle traveling safety problem.

Through research, the inventor finds that a problem of inaccurate measurement of the lidar 100 is caused by the following: In a process in which the receiving module 130 receives an echo generated by a laser beam of the lidar 100, the receiving module 130 may also receive an optical wave emitted by another lidar and/or receive an echo generated by an optical wave emitted by another lidar, or receive an echo generated by another laser beam of the lidar.

To resolve the foregoing technical problem that accuracy of the lidar is not high, this application provides a new technical solution, to improve measurement accuracy of the lidar.

This application provides a laser emitting apparatus. The laser emitting apparatus may be used in a lidar. The laser emitting apparatus may include M emitting modules, and an $m^{th}$ emitting module in the M emitting modules includes array elements in Tm rows and Sm columns, where M is an integer greater than 1, Tm and Sm are positive integers, and m is an integer and is sequentially selected from 1 to M.

In this application, array elements or arrays that emit laser beams at same time are components of one emitting module, and array elements or arrays that emit laser beams at different time are components of different emitting modules.

For example, it is assumed that the laser emitting apparatus includes two emitting modules, one emitting module includes a first array element and a second array element, and the other emitting module includes a third array element and a fourth array element. The first array element and the second array element emit laser beams at same time, the third array element and the fourth array element emit laser beams at same time, and the first array element and the third array element emit laser beams at different time.

When an emitting module includes a plurality of array elements, laser beams emitted by the plurality of array elements in the emitting module may generate a plurality of light spots, and the plurality of light spots do not overlap each other. In other words, two adjacent light spots in the plurality of light spots are discontinuous, that is, there is an interval between the two adjacent light spots in the plurality of light spots.

In the laser emitting apparatus in this application, a plurality of light spots generated by a plurality of laser beams emitted by any emitting module are located in intervals between a plurality of light spots generated by a plurality of laser beams emitted by another emitting module. Optionally, light spots corresponding to different emitting modules may partially overlap.

In the laser emitting apparatus in this application, light spots generated by laser beams emitted by the M emitting modules may form continuous light spots.

The following uses an example in which the laser emitting apparatus of the lidar includes two emitting modules for description. For ease of description, in subsequent content, one of the two emitting modules is referred to as a first emitting module, and the other emitting module is referred to as a second emitting module.

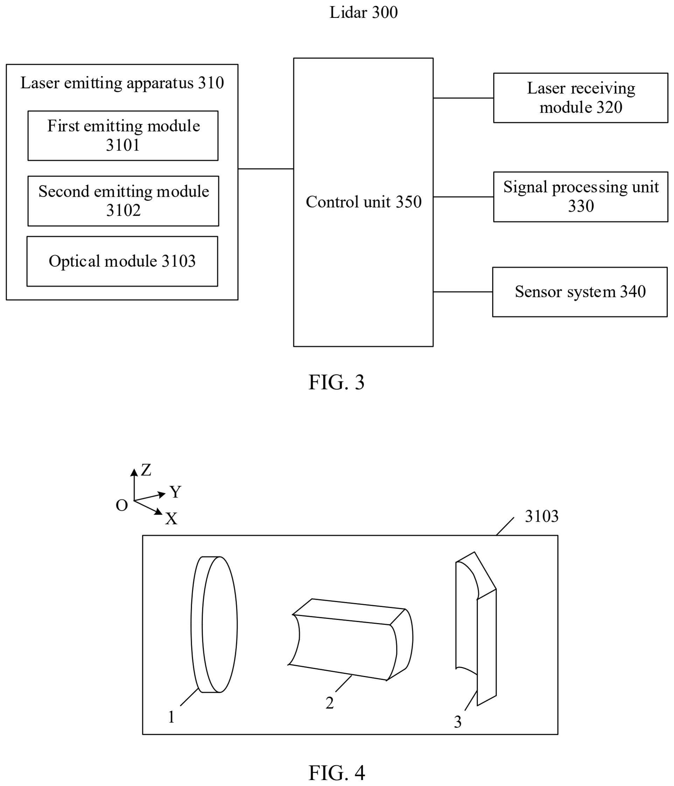

FIG. 3 is a diagram of a lidar 300 according to an embodiment of this application. As shown in FIG. 3, the lidar 300 may include a laser emitting apparatus 310, a laser receiving module 320, a signal processing unit 330, a sensor system 340, and a control unit 350. The laser emitting apparatus 310 includes a first emitting module 3101 and a second emitting module 3102.

In this embodiment, the first emitting module 3101 may include one or more laser arrays, and each laser array in the first emitting module 3101 may include one or more array elements.

In this embodiment, the second emitting module 3102 may include one or more laser arrays, and each laser array in the second emitting module 3102 may include one or more array elements.

The array element is a component that emits a laser beam. For example, the array element may be a laser exciter.

Subsequently, in this application, an example in which the first emitting module 3101 includes one laser array and the second emitting module 3102 includes one laser array is used for description.

In this embodiment, the first emitting module may generate a first light spot when emitting a laser beam in a first time period, and the second emitting module may generate a second light spot when emitting a laser beam in a second time period, where the first time period and the second time period are different time periods.

The first light spot is a discontinuous light spot. In some embodiments, the first light spot may be a plurality of discontinuous point light spots or line light spots. The plurality of point light spots or line light spots in the first light spot may be generated when different array elements in the first emitting module 3101 emit laser beams.

The second light spot is a discontinuous light spot. In some embodiments, the second light spot may be a plurality of discontinuous point light spots or line light spots. The plurality of point light spots or line light spots in the second light spot may be generated when different array elements in the second emitting module 3102 emit laser beams.

The first light spot and the second light spot may form a continuous light spot. In an example, the second light spot is located in an interval in the first light spot.

For example, it is assumed that the first emitting module 3101 emits a first laser beam and a second laser beam, and a light spot generated by the first laser beam and a light spot generated by the second laser beam are discontinuous. The second emitting module 3102 emits a third laser beam and a fourth laser beam, and a light spot generated by the third laser beam and a light spot generated by the fourth laser beam are discontinuous. In this example, the first light spot includes the light spot generated by the first laser beam and the light spot generated by the second laser beam, and the second light spot includes the light spot generated by the third laser beam and the light spot generated by the fourth laser beam. Optionally, that the second light spot is located in the interval in the first light spot may be understood as follows: The light spot generated by the third laser beam may be located in an interval area between the light spot generated by the first laser beam and the light spot generated by the second laser beam, and the light spot generated by the second laser beam may be located in an interval area between the light spot generated by the third laser beam and the light spot generated by the fourth laser beam.

Optionally, the laser emitting apparatus 310 may further include an optical module 3103. The optical module 3103 may be configured to process the laser beam emitted by the first emitting module 3101 into discontinuous light spots, the optical module 3103 may be further configured to process the laser beam emitted by the second emitting module 3102 into discontinuous light spots.

Optionally, there may be one or more optical modules 3103. When there is one optical module 3103, the optical module may simultaneously process laser beams emitted by the first emitting module 3101 and the second emitting module 3012. When there are a plurality of optical modules 3103, a part of the optical modules may process the laser beam emitted by the first emitting module 3101, and the other part of the optical modules may process the laser beam emitted by the second emitting module 3012.

The optical module is configured to collimate a light beam irradiated onto the optical module, that is, adjust a divergence angle of the received light beam, and output a light beam obtained after the divergence angle is adjusted.

In this application, when a laser array includes a plurality of array elements, the optical module is configured to: collimate a plurality of light beams irradiated onto the optical module, and output a plurality of light beams obtained after a divergence angle is adjusted, so that a plurality of light spots may be formed after the plurality of light beams are irradiated onto an object, and the plurality of light spots do not overlap each other.

In the first emitting module 3101 in this embodiment, locations of the array element and the optical module should meet the following conditions: A laser beam emitted by at least one array element can be irradiated onto the optical module, a divergence angle of collimated light output by the optical module is less than a divergence angle of the laser beam irradiated onto the optical module, and at least one light spot formed after the at least one array element irradiates the object does not overlap each other.

FIG. 4 is a diagram of a structure of the optical module 3103 according to an embodiment of this application. In this embodiment, the optical module 3103 may include an optical lens 1, a first cylindrical lens 2, and a second cylindrical lens 3.

The optical lens 1 may be configured to collimate a laser beam irradiated onto the optical lens, to obtain first collimated light. A divergence angle of the first collimated light is less than a divergence angle of the laser beam irradiated onto the optical lens 1.

The first cylindrical lens 2 may be configured to collimate the first collimated light irradiated onto the first cylindrical lens again, to obtain second collimated light. A divergence angle of the second collimated light in a first dimension is less than a divergence angle of the first collimated light in a first dimension, and a divergence angle of the second collimated light in the second dimension is equal to a divergence angle of the first collimated light in the second dimension.

The second cylindrical lens 3 may be configured to collimate the second collimated light irradiated onto the second cylindrical lens again, to obtain third collimated light. A divergence angle of the third collimated light in the first dimension is equal to the divergence angle of the second collimated light in the first dimension, and a divergence angle of the third collimated light in the second dimension is greater than the divergence angle of the second collimated light in the second dimension.

A coordinate system OXYZ shown in FIG. 4 is used as an example. The first dimension may be a longitudinal dimension, and the longitudinal dimension may be parallel to a direction of a Z axis. The second dimension may be a lateral dimension, and the lateral dimension may be parallel to a direction of an X axis. A Y axis indicates a direction in which the first emitting module 3101 emits a laser beam.

Optionally, after the first emitting module 3101 emits the laser beam, lights spot irradiated onto the object may be shown in FIG. 5. In FIG. 5, an ellipse filled with slashes indicates a light spot.

It may be understood that, that a shape of the light spot is an ellipse is merely an example. A size and a shape of the light spot are not limited in this application, provided that the light spots do not overlap each other.

In this embodiment, the first emitting module 3101 includes a plurality of array elements. After laser beams emitted by the plurality of array elements pass through the optical module 3103, a plurality of light spots may be formed on the object, and the plurality of light spots do not overlap each other.

Optionally, an angle of each of the plurality of light spots in a non-scanning direction may be between Fov/(m * n) and Fov/m. Herein, Fov indicates a field of view of the first emitting module 3101, m indicates a quantity of light spots that can be formed by the first emitting module 3101, that is, may be equivalent to a quantity of array elements in the first emitting module 3101, and n indicates a quantity of emitting modules in the lidar. In this embodiment, a value of n may be 2.

The non-scanning direction may indicate an arrangement direction of the array elements in the first emitting module 3101. Correspondingly, an angle of the light spot in the non-scanning direction may be represented as an included angle between connection lines between the first emitting module 3101 and two boundary points of the light spot in the non-scanning direction.

In this embodiment, for structures of components in the second emitting module 3102 and functions that can be implemented by the components, refer to those of the first emitting module 3101. Details are not described herein again.

In this embodiment, field of view ranges of the first emitting module 3101 and the second emitting module 3102 may partially or totally overlap, and light spots generated by the laser beams emitted by the first emitting module 3101 and the second emitting module 3102 may alternate with each other.

Herein, that the light spots generated by the laser beams emitted by the first emitting module 3101 and the second emitting module 3102 alternate with each other may be understood as follows: A light spot generated by the laser beam emitted by the second emitting module 3102 may be located in an interval area between light spots generated by the laser beam emitted by the first emitting module 3101, and a light spot generated by the laser beam emitted by the first emitting module 3101 may be located in an interval area between light spots generated by the laser beam emitted by the second emitting module 3102.

When the light spots generated by the laser beams emitted by the first emitting module 3101 and the second emitting module 3102 alternate with each other, an angle of deflection between the first emitting module 3101 and the second emitting module 3102 may be k * Fov/(m * n), where k is a positive integer.

The angle of deflection between the first emitting module 3101 and the second emitting module 3102 may be understood as an angle difference between a first included angle and a second included angle. The first included angle may be an included angle between a direction in which an $i^{th}$ array element in the first emitting module 3101 emits a laser beam and an optical axis of the first emitting module 3101. The second included angle may be an included angle between a direction in which an $i^{th}$ array element in the second emitting module 3102 emits a laser beam and an optical axis of the second emitting module 3102.

The optical axis of the first emitting module 3101 may be equivalent to an axis of symmetry of the first emitting module 3101, and the optical axis is parallel to the direction in which the first emitting module 3101 emits the laser beam.

The optical axis of the second emitting module 3102 may be equivalent to an axis of symmetry of the second emitting module 3102, and the optical axis is parallel to a direction in which the second emitting module 3102 emits a laser beam.

In this embodiment, there may be a first offset between the optical axis of the first emitting module 3101 and the optical axis of the second emitting module 3012. In this way, the light spots generated by the first emitting module 3101 and the second emitting module 3102 can be prevented from overlapping.

In an implementation, the first emitting module 3101 may be offset by a specific distance in the arrangement direction of the array elements of the first emitting module 3101, so that there is a first offset between the optical axis of the first emitting module 3101 and the optical axis of the second emitting module 3102.

In another implementation, the second emitting module 3102 may be offset by a specific distance in an arrangement direction of the array elements of the second emitting module 3102, so that there is a first offset between the optical axis of the first emitting module 3101 and the optical axis of the second emitting module 3102.

Optionally, there may be a first offset between a center of the array of the first emitting module 3101 and a center of the array of the second emitting module 3012. In this way, the light spots generated by the first emitting module 3101 and the second emitting module 3102 can be prevented from overlapping.

In an implementation, the array of the first emitting module 3101 may be offset by a specific distance relative to the optical axis of the first emitting module 3101, so that there is a first offset between the center of the array of the first emitting module 3101 and the center of the array of the second emitting module 3012.

In another implementation, the array of the second emitting module 3102 may be offset by a specific distance relative to the optical axis of the second emitting module 3102, so that there is a first offset between the center of the array of the first emitting module 3101 and the center of the array of the second emitting module 3012.

FIG. 6 is a diagram of a location of a light spot formed when the lidar 300 irradiates an object according to an embodiment of this application.

(a) in FIG. 6 may indicate a location of a light spot formed when a laser beam emitted by the first emitting module 3101 is irradiated onto the object, (b) in FIG. 6 may indicate a location of a light spot formed when a laser beam emitted by the second emitting module 3102 is irradiated onto the object, and (c) in FIG. 6 may indicate locations of light spots formed when laser beams emitted by the first emitting module 3101 and the second emitting module 3102 are irradiated onto the object.

In this application, the first emitting module 3101 and the second emitting module 3102 perform emission in a time division manner, for example, may perform emission alternately. The alternate emission herein may be understood as follows: The first emitting module 3101 emits a laser beam, next, the second emitting module 3102 emits a laser beam after a period of time, then, the first emitting module 3101 emits a laser beam after a period of time, and the like.

The laser receiving module 320 may be configured to receive a laser beam and process the received laser beam, for example, perform optical filtering and/or optical-to-electrical conversion.

Optionally, the first emitting module 3101 emits a laser beam, and the laser receiving module 320 receives a laser beam. The second emitting module 3102 emits a laser beam, and the laser receiving module 320 receives a laser beam.

After the first emitting module 3101 emits the laser beam, the echo received by the laser receiving module 320 may include an echo generated after the laser beam emitted by the first emitting module 3101 is irradiated onto the object, or may include another crosstalk echo, or includes both the echo generated after the laser beam emitted by the first emitting module 3101 is irradiated onto the object and the another crosstalk echo. It may be understood that, after the first emitting module 3101 emits the laser beam, the laser receiving module 320 may not receive any echo.

Similarly, after the second emitting module 3102 emits the laser beam, the echo received by the laser receiving module 320 may include an echo generated after the laser beam emitted by the second emitting module 3102 is irradiated onto the object, or may include another crosstalk echo, or includes both the echo generated after the laser beam emitted by the second emitting module 3102 is irradiated onto the object and the another crosstalk echo. It may be understood that, after the second emitting module 3102 emits the laser beam, the laser receiving module 320 may not receive any echo.

In this embodiment, after the first emitting module 3101 or the second emitting module 3102 emits the laser beam, if the laser receiving module 320 receives the laser beam, the laser receiving module 320 may determine echo information based on the received echo, and send the echo information. The echo information may include receiving time of the laser beam, an intensity of the received laser beam, and the like.

In some embodiments, the laser receiving module 320 may send the echo information to the signal processing unit 330. In some other embodiments, the laser receiving module 320 may send the echo information to a controller, and the controller may be deployed outside the lidar 300.

The signal processing unit 330 may receive the echo information, and generate a point cloud data set based on the echo information, and environment information and location information of the lidar 300. The point cloud data set includes a plurality of pieces of point cloud data, and each piece of point cloud data may correspond to one spatial point. The point cloud data may include information such as a distance from the spatial point to the lidar, a laser intensity at the spatial point, and location coordinates of the spatial point.

In an implementation of embodiments of this application, the lidar may generate three pieces of point cloud data for one echo received by the laser receiving module 320.

The signal processing unit 340 may further generate a point cloud map based on the point cloud data set. Each piece of point cloud data corresponds to one pixel in the point cloud map, or one pixel may be generated based on one piece of point cloud data.

Optionally, that the lidar generates the three pieces of point cloud data for the echo received by the receiving module may be understood as: For each laser beam emitted by each emitting module, the lidar may generate three pixels for an echo received by the laser receiving module.

In embodiments of this application, a coverage area of a laser beam emitted by each emitting module may be referred to as an ideal lighting area of the laser beam, and an area that cannot be covered by the laser beam may be referred to as an ideal non-lighting area.

In embodiments of this application, a coverage area of each laser beam emitted by each emitting module can be known. Therefore, it may be determined, based on a location of each pixel, whether the pixel is located in an ideal lighting area of the laser beam or an ideal non-lighting area of the laser beam.

After the first emitting module 3101 emits the laser beam, the signal processing unit 330 in the lidar may generate a point cloud data set based on an echo received by the laser receiving module 320. Further, the signal processing unit 330 may generate a point cloud map based on the point cloud data set. For ease of description, the point cloud data set is referred to as a first point cloud data set, and the point cloud map is referred to as a first point cloud map.

After the second emitting module 3102 emits the laser beam, the signal processing unit 330 may generate a point cloud data set based on an echo received by the laser receiving module 320. Further, the signal processing unit 330 may generate a point cloud map based on the point cloud data set. For ease of description, the point cloud data set is referred to as a second point cloud data set, and the point cloud map is referred to as a second point cloud map.

An example of the first point cloud map is shown in (a) in FIG. 7, and an example of the second point cloud map is shown in (b) in FIG. 7. In a point cloud map shown in FIG. 7, each small grid indicates one pixel, and a small grid filled with slashes indicates that the pixel is located in an ideal lighting area of a laser beam emitted by an emitting module, a small blank grid indicates that the pixel is located in an ideal non-lighting area of the laser beam emitted by the emitting module.

After obtaining the first point cloud data set and the second point cloud data set, the signal processing unit 330 may obtain a target point cloud data set based on the first point cloud data set and the second point cloud data set. The target point cloud data set includes point cloud data that meets a specified condition in the first point cloud data set and the second point cloud data set. For ease of description, point cloud data that meets the specified condition in the first point cloud data set is referred to as first point cloud data, and point cloud data that meets the specified condition in the second point cloud data set is referred to as second point cloud data.

For ease of description, in embodiments of this application, an ideal non-lighting area adjacent to an ideal lighting area in which a location indicated by the first point cloud data is located is referred to as an adjacent ideal non-lighting area of the first point cloud data, point cloud data located in the adjacent ideal non-lighting area of the first point cloud data is referred to as adjacent point cloud data of the first point cloud data, and point cloud data that is in the second point cloud data set and that falls into the ideal lighting area corresponding to the first point cloud data is referred to as crosstalk point cloud data of the first point cloud data.

The adjacent ideal non-lighting area of the first point cloud data may include all or some adjacent ideal non-lighting areas of the ideal lighting area in which the location indicated by the first point cloud data is located. For example, when the location indicated by the first point cloud data is a 2nd light spot area in (a) in FIG. 6, the adjacent ideal non-lighting area of the first point cloud data includes an area between a 1st light spot area and the 2nd light spot area and an area between the 2nd light spot area and a 3rd light spot area.

That the first point cloud data meets the specified condition may be understood as follows: The location indicated by the first point cloud data is located in an ideal lighting area of the laser beam of the first emitting module, and a difference between a light intensity indicated by the first point cloud data and an estimated crosstalk light intensity at the location indicated by the first point cloud data is greater than or equal to a light intensity threshold. The estimated crosstalk light intensity at the location indicated by the first point cloud data may be determined based on a light intensity in the adjacent point cloud data of the first point cloud data and/or a light intensity in crosstalk point cloud data of the first point cloud data.

For example, weighted summation may be performed on the light intensity in the adjacent point cloud data of the first point cloud data and/or the light intensity in the crosstalk point cloud data of the first point cloud data, to obtain the estimated crosstalk light intensity at the location indicated by the first point cloud data.

For example, for any piece of first point cloud data, an estimated crosstalk light intensity at a location indicated by the first point cloud data may be determined according to Formula (1):

$$\lambda = \sum_i \varphi_i \times \lambda_i + \omega \times \lambda_\omega \qquad (1)$$

Herein, $\lambda$ indicates the estimated crosstalk light intensity in the first point cloud data, $\varphi_i$ indicates a weight of a light intensity in an $i$th piece of adjacent point cloud data of the first point cloud data, $\lambda_i$ indicates the light intensity in the $i$th piece of adjacent point cloud data, $\omega$ indicates a weight of a light intensity in crosstalk point cloud data of the first point cloud data, and $\lambda_\omega$ indicates the light intensity in the crosstalk point cloud data.

In a possible implementation, a weight of a light intensity in any piece of adjacent point cloud data of the first point cloud data may be determined based on two distances, one of the distances is a distance between a spatial point corresponding to the first point cloud data and the lidar, and the other distance is a distance between a spatial point corresponding to the adjacent point cloud data and the lidar. A difference between the previous distance and the next distance is less than or equal to a distance threshold.

For example, the weight of the light intensity in the adjacent point cloud data of the first point cloud data may be a ratio of the previous distance to the next distance. The weight of the light intensity in the adjacent point cloud data of the first point cloud data may be referred to as a first light intensity weight.

Optionally, when the difference between the distance between the spatial point corresponding to the first point cloud data and the lidar and the distance between the spatial point corresponding to the adjacent point cloud data and the lidar is greater than a preset distance threshold, the first light intensity weight may be 0.

A weight of the light intensity in the crosstalk point cloud data of the first point cloud data may also be determined based on two distances, one of the distances is the distance between the spatial point corresponding to the first point cloud data and the lidar, and the other distance is a distance between a spatial point corresponding to the crosstalk point cloud data and the lidar. A difference between the previous distance and the next distance is less than or equal to a distance threshold.

For example, the weight of the light intensity in the crosstalk point cloud data of the first point cloud data may be a ratio of the previous distance to the next distance. The weight of the light intensity in the crosstalk point cloud data of the first point cloud data may be referred to as a second light intensity weight.

Optionally, when the difference between the distance between the spatial point corresponding to the first point cloud data and the lidar and the distance between the spatial point corresponding to the crosstalk point cloud data in the first point cloud data and the lidar is greater than a preset distance threshold, the second light intensity weight may be 0.

In this case, the first light intensity weight may be used as the weight of the light intensity in the adjacent point cloud data, and the second light intensity weight may be used as the weight of the light intensity in the crosstalk point cloud data. The estimated crosstalk light intensity is determined based on the first light intensity weight and the second light intensity weight.

In another possible implementation, after the first light intensity weight is determined, the first light intensity weight may be further normalized based on a first coordinate distance and a second coordinate distance, to obtain a third light intensity weight.

The first coordinate distance may be a distance between a corresponding coordinate location of the adjacent point cloud data in the first point cloud map and a corresponding coordinate location of the first point cloud data in the first point cloud map. The second coordinate distance may be a distance between a corresponding coordinate location of the crosstalk point cloud data of the first point cloud data in the second point cloud map and a corresponding coordinate location of the adjacent point cloud data of the crosstalk point cloud data in the second point cloud map.

Optionally, after the second light intensity weight is determined, the second light intensity weight may be further normalized based on the first coordinate distance and the second coordinate distance, to obtain a fourth light intensity weight.

In this case, the third light intensity weight may be used as the weight of the light intensity in the adjacent point cloud data, and the fourth light intensity weight may be used as the weight of the light intensity in the crosstalk point cloud data. The estimated crosstalk light intensity is determined based on the third light intensity weight and the fourth light intensity weight.

Optionally, that the estimated crosstalk light intensity at the location indicated by the first point cloud data may be determined based on the light intensity in the adjacent point cloud data of the first point cloud data and/or the light intensity in the crosstalk point cloud data of the first point cloud data may include: The estimated crosstalk light intensity at the location indicated by the first point cloud data may be a sum of the light intensity in the adjacent point cloud data of the first point cloud data and/or the light intensity in the crosstalk point cloud data of the first point cloud data.

The specified condition that the second point cloud data meets is similar to the specified condition that the first point cloud data meets. A difference lies in that first in the specified condition that the first point cloud data meets is replaced with second, and second in the specified condition that the first point cloud data meets is replaced with first.

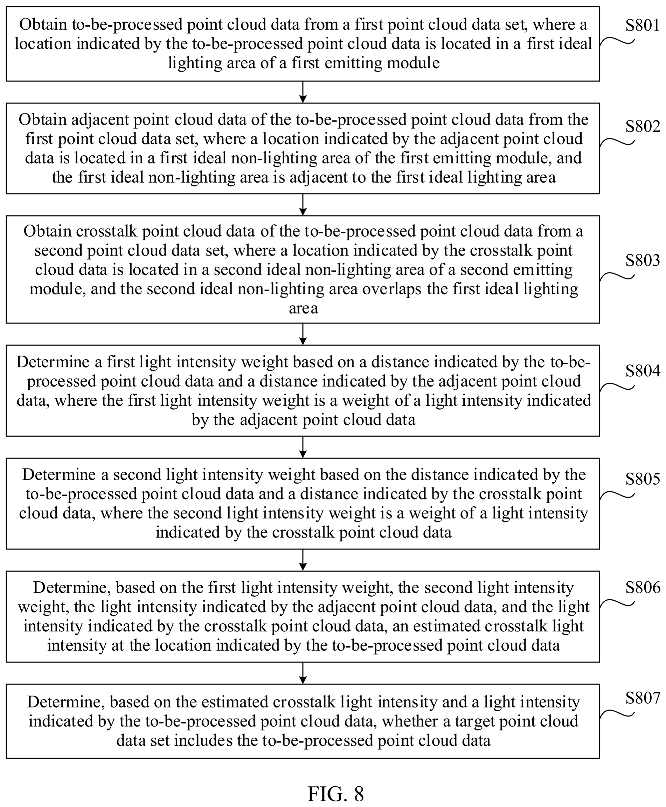

Next, in this application, a method for obtaining the first point cloud data from the first point cloud data set is described with reference to FIG. 8.

FIG. 8 is a diagram of a method for controlling the lidar 300 according to an embodiment of this application. As shown in FIG. 8, the method may include S801 to S807.

Optionally, the method may be performed by the signal processing unit 330 in FIG. 3.

Optionally, the method may alternatively be performed by a controller. The controller may be deployed outside the lidar 300. In some embodiments, the controller may alternatively be a processor, a chip used in a controller, or a chip used in a processor.

S801: Obtain to-be-processed point cloud data from a first point cloud data set, where a location indicated by the to-be-processed point cloud data is located in a first ideal lighting area of a first emitting module.

In this embodiment, the first emitting module may be the first emitting module 3101 in embodiments shown in FIG. 3.

In this embodiment, an ideal lighting area of the first emitting module 3101 includes the first ideal lighting area, and the first ideal lighting area is an area that is in the ideal lighting area of the first emitting module 3101 and that includes the location indicated by the to-be-processed point cloud data.

FIG. 7 is used as an example. It is assumed that the to-be-processed point cloud data corresponds to the $8^{th}$ grid in the first point cloud map.

In this embodiment, before the to-be-processed point cloud data is obtained from the first point cloud data set, the first emitting module 3101 is controlled to emit a first laser beam and a second laser beam in a first time period; the second emitting module 3102 is controlled to emit a third laser beam and a fourth laser beam in a second time period, where the first time period and the second time period are different time periods; and the laser receiving module 320 is controlled to receive an echo.

A light spot generated by the first laser beam is discontinuous with a light spot generated by the second laser beam, and a light spot generated by the third laser beam is discontinuous with a light spot generated by the fourth laser beam.

The light spot generated by the third laser beam may be located in an interval area between the light spot generated by the first laser beam and the light spot generated by the second laser beam, and the light spot generated by the second laser beam may be located in an interval area between the light spot generated by the third laser beam and the light spot generated by the fourth laser beam.

In this embodiment, obtaining the to-be-processed point cloud data may include: receiving echo information, where the echo information is determined by the laser receiving module 320 based on the received echo, and the echo information is used to generate the first point cloud data set; and obtaining the to-be-processed point cloud data from the first point cloud data set.

In this embodiment, the to-be-processed point cloud data may include a first distance and a first light intensity. The first distance may be a distance between a first spatial point and the lidar 300, and the first spatial point may be located in the light spot generated by the second laser beam.

The laser receiving module 320 may form the to-be-processed point cloud data based on a first echo. The first distance may be determined based on time at which the first emitting module 3101 emits the second laser beam and time at which the laser receiving module 320 receives the first echo. The first light intensity may be a light intensity of the first echo. Herein, the light intensity of the first echo may be understood as a light intensity at which the to-be-processed point cloud data is formed in the first echo, that is, indicating a quantity of photons corresponding to the to-be-processed point cloud data.

S802: Obtain adjacent point cloud data of the to-be-processed point cloud data from the first point cloud data set, where a location indicated by the adjacent point cloud data is located in a first ideal non-lighting area of the first emitting module, and the first ideal non-lighting area is adjacent to the first ideal lighting area.

Optionally, there may be one or two first ideal non-lighting areas.

Optionally, one piece of adjacent point cloud data, two pieces of adjacent point cloud data, a plurality of pieces of adjacent point cloud data, or zero pieces of adjacent point cloud data may be obtained from the first point cloud data set for the to-be-processed point cloud data.

Optionally, a difference between a distance indicated by the adjacent point cloud data and a distance indicated by the to-be-processed point cloud data is less than or equal to a distance threshold. The distance indicated by the adjacent point cloud data is a distance between a spatial point corresponding to the adjacent point cloud data and the lidar 300, and the distance indicated by the to-be-processed point cloud data is a distance between a spatial point corresponding to the to-be-processed point cloud data and the lidar 300.

FIG. 7 is used as an example. When the to-be-processed point cloud data corresponds to grid 8 in the first point cloud map, one or more pieces of corresponding point cloud data in grid 4, grid 5, grid 6, grid 10, grid 11, and grid 12 in the first point cloud map may be determined as adjacent point cloud data.

In a possible implementation, the adjacent point cloud data may include first adjacent point cloud data.

FIG. 7 is used as an example. A location indicated by the first adjacent point cloud data may be any one of grid 4, grid 5, grid 6, grid 10, grid 11, and grid 12 in the first point cloud map. For example, the location indicated by the first adjacent point cloud data may be grid 5 in the first point cloud map.

In this embodiment, the first adjacent point cloud data may include a second distance and a second light intensity. The second distance may be a distance between a second spatial point and the lidar 300, and the second spatial point may be located in the light spot generated by the third laser beam.

The laser receiving module 320 may form the first adjacent point cloud data based on a second echo. The second distance may be determined based on the time at which the first emitting module 3101 emits the second laser beam and time at which the laser receiving module 320 receives the second echo. The second light intensity may be a light intensity of the second echo. Herein, the light intensity of the second echo may be understood as a light intensity at which the first adjacent point cloud data is formed in the second echo, that is, indicating a quantity of photons corresponding to the first adjacent point cloud data.

It may be understood that the second echo may include a crosstalk echo generated when the first emitting module 3101 emits the second laser beam.

In another possible implementation, the adjacent point cloud data may further include second adjacent point cloud data.

A location indicated by the second adjacent point cloud data and the location indicated by the first adjacent point cloud data may be different first ideal non-lighting areas.

FIG. 7 is used as an example. When the location indicated by the first adjacent point cloud data is grid 5 in the first point cloud map, the location indicated by the second adjacent point cloud data may be any one of grid 10, grid 11, and grid 12. For example, the location indicated by the second adjacent point cloud data may be grid 11.

In this embodiment, the second adjacent point cloud data may include a third distance and a third light intensity. The third distance may be a distance between a third spatial point and the lidar 300, and the third spatial point may be located in the light spot generated by the fourth laser beam.

The laser receiving module 320 may form the second adjacent point cloud data based on a third echo. The third distance may be determined based on the time at which the first emitting module 3101 emits the second laser beam and time at which the laser receiving module 320 receives the third echo. The third light intensity may be a light intensity of the third echo. Herein, the light intensity of the third echo may be understood as a light intensity at which the second adjacent point cloud data is formed in the third echo, that is, indicating a quantity of photons corresponding to the second adjacent point cloud data.

It may be understood that the third echo may include a crosstalk echo generated when the first emitting module 3101 emits the second laser beam.

S803: Obtain crosstalk point cloud data of the to-be-processed point cloud data from a second point cloud data set, where a location indicated by the crosstalk point cloud data is located in a second ideal non-lighting area of the second emitting module, and the second ideal non-lighting area overlaps the first ideal lighting area.

In this embodiment, the second emitting module may be the second emitting module 3102 in embodiments shown in FIG. 3.

Optionally, one piece of crosstalk point cloud data, two pieces of crosstalk point cloud data, a plurality of pieces of crosstalk point cloud data, or zero pieces of crosstalk point cloud data may be obtained from the second point cloud data set for the to-be-processed point cloud data.

Optionally, a difference between a distance indicated by the crosstalk point cloud data and a distance indicated by the to-be-processed point cloud data is less than or equal to a distance threshold. The distance indicated by the crosstalk point cloud data is a distance between a spatial point corresponding to the crosstalk point cloud data and the lidar.

FIG. 7 is used as an example. When the to-be-processed point cloud data corresponds to grid 8 in the first point cloud map, point cloud data corresponding to one or more of grid 7, grid 8, and grid 9 in a second point cloud map may all be determined as the crosstalk point cloud data. For example, the location indicated by the crosstalk point cloud data may be grid 8 in the second point cloud map.

In this embodiment, the crosstalk point cloud data may include a fourth distance and a fourth light intensity. The fourth distance may be a distance between a fourth spatial point and the lidar 300, and the fourth spatial point may be located in the light spot generated by the second laser beam.

The laser receiving module 320 may form the crosstalk point cloud data based on a fourth echo. The fourth distance may be determined based on time at which the second emitting module 3102 emits the third laser beam and time at which the laser receiving module 320 receives the fourth echo. The fourth light intensity may be a light intensity of the fourth echo. Herein, the light intensity of the fourth echo may be understood as a light intensity at which the crosstalk point cloud data is formed in the fourth echo, that is, indicating a quantity of photons corresponding to the crosstalk point cloud data.

It may be understood that the fourth echo may include a crosstalk echo generated when the second emitting module 3102 emits the third laser beam.

S804: Determine the first light intensity weight based on the distance indicated by the to-be-processed point cloud data and the distance indicated by the adjacent point cloud data, where the first light intensity weight is a weight of a light intensity indicated by the adjacent point cloud data.

In this embodiment, the first light intensity weight may be used to determine, based on the light intensity indicated by the adjacent point cloud data, an estimated crosstalk light intensity at the location indicated by the to-be-processed point cloud data.

Optionally, there may be one, two, more, or zero first light intensity weights. A quantity of first light intensity weights is the same as a quantity of adjacent point cloud data, and one piece of adjacent point cloud data may correspond to one first light intensity weight.

For example, a first light intensity weight corresponding to one piece of adjacent point cloud data may be a ratio of the distance indicated by the to-be-processed point cloud data to a distance indicated by the adjacent point cloud data.

In a possible implementation, when the adjacent point cloud data includes the first adjacent point cloud data, a first light intensity weight corresponding to the first adjacent point cloud data may be a ratio of a distance indicated by the to-be-processed point cloud data to a distance indicated by the first adjacent point cloud data.

In another possible implementation, when the adjacent point cloud data includes the second adjacent point cloud data, a first light intensity weight corresponding to the second adjacent point cloud data may be a ratio of the distance indicated by the to-be-processed point cloud data to a distance indicated by the second adjacent point cloud data.

S805: Determine a second light intensity weight based on the distance indicated by the to-be-processed point cloud data and the distance indicated by the crosstalk point cloud data, where the second light intensity weight is a weight of a light intensity indicated by the crosstalk point cloud data.

In this embodiment, the second light intensity weight may be used to determine, based on the light intensity indicated by the crosstalk point cloud data, the estimated crosstalk light intensity at the location indicated by the to-be-processed point cloud data.

Optionally, there may be one, two, more, or zero second light intensity weights. A quantity of second light intensity weights is the same as a quantity of crosstalk point cloud data, and one piece of crosstalk point cloud data may correspond to one second light intensity weight.

For example, a second light intensity weight corresponding to one piece of crosstalk point cloud data may be a ratio of the distance indicated by the to-be-processed point cloud data to a distance indicated by the crosstalk point cloud data.

S806: Determine, based on the first light intensity weight, the second light intensity weight, the light intensity indicated by the adjacent point cloud data, and the light intensity indicated by the crosstalk point cloud data, the estimated crosstalk light intensity at the location indicated by the to-be-processed point cloud data.

In a possible implementation, weighted summation may be separately performed, based on the first light intensity weight and the second light intensity weight, on the light intensity indicated by the adjacent point cloud data and the light intensity indicated by the crosstalk point cloud data, to obtain the estimated crosstalk light intensity at the location indicated by the to-be-processed point cloud data.

For example, when it is assumed that related point cloud data of the to-be-processed point cloud data includes the first point cloud data, the second point cloud data, and the crosstalk point cloud data, the estimated crosstalk light intensity at the location indicated by the to-be-processed point cloud data may be determined according to Formula (2):

$$\lambda^{/} = \varphi_1 \times \lambda_1 + \varphi_2 \times \lambda_2 + \omega \times \lambda_{\omega} \qquad (2)$$

Herein, $\lambda^{/}$ indicates the estimated crosstalk light intensity at the location indicated by the to-be-processed point cloud data, $\varphi i_1$ indicates the weight of the light intensity in the first adjacent point cloud data, $\lambda_1$ indicates the light intensity indicated by the first adjacent point cloud data, $\varphi_2$ indicates the weight of the light intensity of the second adjacent point cloud data, $\lambda_2$ indicates the light intensity indicated by the second adjacent point cloud data, $\omega$ indicates the weight of the light intensity of the crosstalk point cloud data, and $\lambda_{\omega}$ indicates the light intensity indicated by the crosstalk point cloud data.

In this example, the weight of the light intensity of the first adjacent point cloud data is the foregoing first light intensity weight of the first adjacent point cloud data, and the light intensity indicated by the first adjacent point cloud data is the foregoing second light intensity. The weight of light intensity in the second adjacent point cloud data is the foregoing first light intensity weight of the second adjacent point cloud data, and the light intensity indicated by the second adjacent point cloud data is the foregoing third light intensity. The weight of the light intensity in the crosstalk point cloud data is the foregoing second light intensity weight, and the light intensity indicated by the crosstalk point cloud data is the foregoing fourth light intensity.

In another possible implementation, after the first light intensity weight is determined, normalization may be first performed on the first light intensity weight to obtain a third light intensity weight. After the second light intensity weight is determined, normalization may be performed on the second light intensity weight to obtain a fourth light intensity weight. Then, weighted summation is separately performed, based on the third light intensity weight and the fourth light intensity weight, on the light intensity indicated by the adjacent point cloud data and the light intensity indicated by the crosstalk point cloud data, to obtain the estimated crosstalk light intensity at the location indicated by the to-be-processed point cloud data.

For example, normalization may be separately performed on the first light intensity weight and the second light intensity weight based on a first coordinate distance and a second coordinate distance, to obtain the third light intensity weight and the fourth light intensity weight.

The first coordinate distance may be a distance between a corresponding coordinate location of the adjacent point cloud data in the first point cloud map and a corresponding coordinate location of the first point cloud data in the first point cloud map. The second coordinate distance may be a distance between a corresponding coordinate location of the crosstalk point cloud data of the first point cloud data in the second point cloud map and a corresponding coordinate location of the adjacent point cloud data of the crosstalk point cloud data in the second point cloud map.

For example, when the adjacent point cloud data includes the first adjacent point cloud data and the second adjacent point cloud data, the first coordinate distance may be a sum of two coordinate distances, in the two coordinate distances, a 1st coordinate distance is a distance between a coordinate location corresponding to the first adjacent point cloud data in the first point cloud map and a coordinate location corresponding to the first point cloud data in the first point cloud map, and a 2nd coordinate distance is a distance between a coordinate location corresponding to the second adjacent point cloud data in the first point cloud map and the coordinate location corresponding to the first point cloud data in the first point cloud map.

In this case, when the third light intensity weight is determined, a sum of third light intensity weights of the first adjacent point cloud data and the second adjacent point cloud data may be first determined based on the first coordinate distance and the second coordinate distance, and then a third light intensity weight of the first adjacent point cloud data and a third light intensity weight of the second adjacent point cloud data are determined based on the two coordinate distances in the first coordinate distance.

For example, the sum of the third light intensity weights may be determined according to Formula (3):

$$\varphi = \frac{\alpha_1 * s_1}{\alpha_1 * s_1 + \alpha_2 * s_2} \qquad (3)$$

Herein, $\varphi$ indicates the sum of the third light intensity weights of the first adjacent point cloud data and the second adjacent point cloud data, $\alpha_1$ indicates a sum of first light intensity weights of the first adjacent point cloud data and the second adjacent point cloud data, $s_1$ indicates a first ratio, $\alpha_2$ indicates the second light intensity weight, and $s_2$ indicates a second ratio. The first ratio is equal to a ratio of the second coordinate distance to a sum of the first coordinate distance and the second coordinate distance, and the second ratio is equal to a ratio of the first coordinate distance to the sum of the first coordinate distance and the second coordinate distance.

Further, the third light intensity weight of the first adjacent point cloud data may be determined according to Formula (4):

$$\varphi_1 = \varphi * s_3 \qquad (4)$$

Herein, $\varphi_1$ indicates the third light intensity weight of the first adjacent point cloud data, and $s_3$ indicates a ratio of the 2nd coordinate distance in the first coordinate distance to the first coordinate distance.

The third light intensity weight of the second adjacent point cloud data may be determined according to Formula (5):

$$\varphi_2 = \varphi * s_4 \qquad (5)$$

Herein, $\varphi_2$ indicates the third light intensity weight of the second adjacent point cloud data, and $s_4$ indicates a ratio of the 1st coordinate distance in the first coordinate distance to the first coordinate distance.

For example, the fourth light intensity weight may be determined according to Formula (6):

$$\omega = \frac{\alpha_2 * s_2}{\alpha_1 * s_1 + \alpha_2 * s_2} \qquad (6)$$

Herein, $\omega$ indicates the fourth light intensity weight.

In this example, the weight of the light intensity in the first adjacent point cloud data is the foregoing third light intensity weight of the first adjacent point cloud data, and the weight of the light intensity in the second adjacent point cloud data is the foregoing third light intensity weight of the second adjacent point cloud data. The weight of the light intensity in the crosstalk point cloud data is the foregoing fourth light intensity weight.

Optionally, in some embodiments, the related point cloud data of the to-be-processed point cloud data may include any one or more of the first adjacent point cloud data, the second adjacent point cloud data, and the crosstalk point cloud data.

S807: Determine, based on the estimated crosstalk light intensity and a light intensity indicated by the to-be-processed point cloud data, whether the to-be-processed point cloud data is the first point cloud data.

In this embodiment, a method for determining, based on the estimated crosstalk light intensity and the light intensity indicated by the to-be-processed point cloud data, whether a target point cloud data set includes the to-be-processed point cloud data may include: comparing the estimated crosstalk light intensity with the light intensity indicated by the to-be-processed point cloud data. If a difference between the estimated crosstalk light intensity and the light intensity indicated by the to-be-processed point cloud data is less than or equal to a light intensity threshold, it indicates that the to-be-processed point cloud data does not include real image information, and the to-be-processed point cloud data is not the first point cloud data. In other words, the target point cloud data set does not include the to-be-processed point cloud data. If the estimated crosstalk light intensity and the light intensity indicated by the to-be-processed point cloud data are greater than the light intensity threshold, it indicates that the to-be-processed point cloud data includes the real image information, and the to-be-processed point cloud data is the first point cloud data. In other words, the target point cloud data set includes the to-be-processed point cloud data. Optionally, in the technical solutions of this application, the second point cloud data further needs to be obtained from the second point cloud data set. A method for obtaining the second point cloud data from the second point cloud data set is the same as a method for obtaining the first point cloud data from the first point cloud data set. Details are not described herein again.

In this application, after the first point cloud data and the second point cloud data are obtained, the lidar may obtain the target point cloud data set based on the first point cloud data and the second point cloud data, and then generate a target point cloud map based on the target point cloud data set. The first point cloud data is point cloud data, in the first point cloud data set, that includes the real image information, and the second point cloud data is point cloud data, in the second point cloud data set, that includes the real image information. Therefore, each piece of point cloud data in the target point cloud data set obtained based on the first point cloud data and the second point cloud data includes the real image information, so that measurement accuracy of the lidar can be improved.

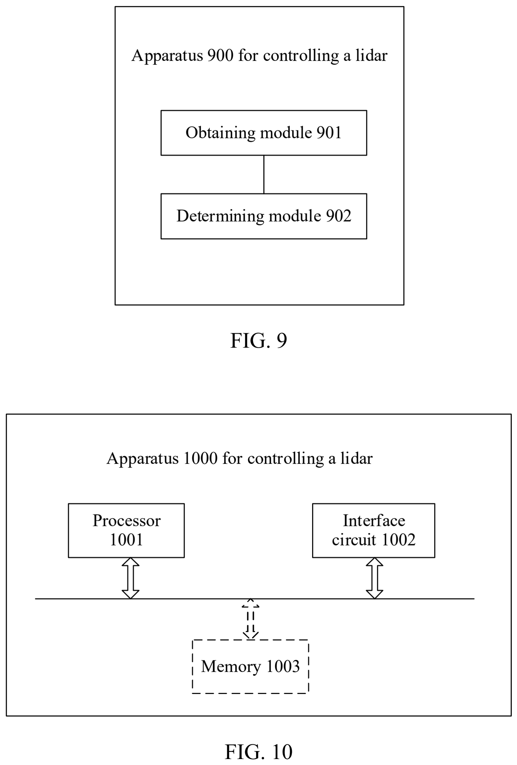

FIG. 9 is a diagram of a structure of an apparatus for controlling a lidar according to an embodiment of this application. As shown in FIG. 9, the apparatus 900 for controlling a lidar includes an obtaining module 901 and a determining module 902.

In an example, the control apparatus 900 may be configured to implement the processing method in embodiments shown in FIG. 8. The obtaining module 901 may be configured to perform S801 to S803, and the determining module 902 may be configured to perform S804 to S807.

FIG. 10 is a diagram of a structure of an apparatus for controlling a lidar according to another embodiment of this application. As shown in FIG. 10, the apparatus 1000 for controlling a lidar may include a processor 1001 and an interface circuit 1002. The processor 1001 is coupled to the interface circuit 1002. It may be understood that the interface circuit 1002 may be a transceiver or an input/output interface. Optionally, the control apparatus 1000 may further include a memory 1003, configured to store instructions executed by the processor 1001, or store input data required by the processor 1001 to run instructions, or store data generated after the processor 1001 runs instructions.

In an example, the processor 1001 may be configured to implement a function of the determining module 902. The interface circuit 1002 may be configured to implement a function of the obtaining module 901.

The control apparatus 1000 may be a controller, or may be a chip used in a controller.

In this application, the first emitting module 3101 and the second emitting module 3102 of the lidar 300 may also send laser beams in a same time period.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor.

The method steps in embodiments of this application may be implemented in a hardware manner, or may be implemented in a manner of executing software instructions by the processor. The software instructions may include a corresponding software module. The software module may be stored in a random access memory (random access memory, RAM), a flash memory, a read-only memory (Read-Only Memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may alternatively be a component of the processor. The processor and the storage medium may be disposed in an ASIC. In addition, the ASIC may be located in an access network device or a terminal device. Certainly, the processor and the storage medium may exist in the access network device or the terminal device as discrete components.

All or some of the foregoing embodiments may be implemented by using software, hardware, firmware, or any combination thereof. When software is used to implement the foregoing embodiments, all or some of embodiments may be implemented in a form of a computer program product. The computer program product includes one or more computer programs or instructions. When the computer programs or the instructions are loaded and executed on a computer, the procedures or functions in embodiments of this application are all or partially performed. The computer may be a general-purpose computer, a dedicated computer, a computer network, or another programmable apparatus. The computer programs or the instructions may be stored in a computer-readable storage medium, or may be transmitted through the computer-readable storage medium. The computer-readable storage medium may be any usable medium accessible by the computer, or a data storage device, for example, a server, integrating one or more usable media. The usable medium may be a magnetic medium, for example, a floppy disk, a hard disk, or a magnetic tape; may be an optical medium, for example, a DVD; or may be a semiconductor medium, for example, a solid state disk (solid state disk, SSD).

In embodiments of this application, unless otherwise stated or there is a logic conflict, terms and/or descriptions between different embodiments are consistent and may be mutually referenced, and technical features in different embodiments may be combined based on an internal logical relationship thereof, to form a new embodiment.

It may be understood that various numbers in embodiments of this application are merely used for differentiation for ease of description, and are not used to limit the scope of embodiments of this application. The sequence numbers of the foregoing processes do not mean an execution sequence, and the execution sequence of the processes should be determined based on functions and internal logic of the processes.

**Claims**

1. A laser emitting apparatus, wherein the laser emitting apparatus is used in a lidar, and the laser emitting apparatus comprises a first emitting module and a second emitting module;

   the first emitting module is configured to generate a first light spot when emitting a laser beam in a first time period, and the second emitting module is configured to generate a second light spot when emitting a laser beam in a second time period, wherein the first time period and the second time period are different time periods;
   the first light spot is a discontinuous light spot, and the second light spot is a discontinuous light spot; and
   the first light spot and the second light spot form a continuous light spot.

2. The apparatus according to claim 1, wherein the first emitting module comprises one or more laser arrays, and each laser array in the first emitting module comprises one or more array elements; and
   the second emitting module comprises one or more laser arrays, and each laser array in the second emitting module comprises one or more array elements.

3. The apparatus according to claim 1 or 2, wherein the first light spot is a plurality of discontinuous point light spots or line light spots, and the second light spot is a plurality of discontinuous point light spots or line light spots.

4. The apparatus according to claim 3, wherein the plurality of point light spots or line light spots in the first light spot are generated when different array elements in the first emitting module emit laser beams; and
   the plurality of point light spots or line light spots in the second light spot are generated when different laser array elements in the second emitting module emit laser beams.

5. The apparatus according to any one of claims 1 to 4, wherein the second light spot is located in an interval in the first light spot.

6. The apparatus according to any one of claims 1 to 5, wherein the first emitting module emits a first laser beam and a second laser beam, and a light spot generated by the first laser beam and a light spot generated by the second laser beam are discontinuous;

   the second emitting module emits a third laser beam and a fourth laser beam, and a light spot generated by the third laser beam and a light spot generated by the fourth laser beam are discontinuous; and
   the light spot generated by the third laser beam is located in an interval area between the light spot generated by the first laser beam and the light spot generated by the second laser beam, and the light spot generated by the second laser beam is located in an interval area between the light spot generated by the third laser beam and the light spot generated by the fourth laser beam.

7. The apparatus according to any one of claims 1 to 6, wherein the laser emitting apparatus further comprises an optical module, the optical module is configured to process laser beams emitted by the first emitting module into discontinuous light spots, and the optical module is further configured to process laser beams emitted by the second emitting module into discontinuous light spots.

8. The apparatus according to any one of claims 1 to 7, wherein there is a first offset between an optical axis of the first emitting module and an optical axis of the second emitting module.

9. The apparatus according to any one of claims 1 to 7, wherein there is a first offset between a center of the laser array of the first emitting module and a center of the laser array of the second emitting module.

10. A lidar, comprising the laser emitting apparatus according to any one of claims 1 to 9 and a laser receiving module, wherein

    the laser receiving module is configured to receive an echo and determine echo information based on the received echo, wherein the echo information is used to generate a point cloud data set, the point cloud data set comprises a plurality of pieces of point cloud data, each of the plurality of pieces of point cloud data comprises distance information and light intensity information, the distance information indicates a distance between a spatial point and the lidar, and the light intensity information indicates a light intensity of the echo; and
    the laser receiving module is further configured to send the echo information.

**11.** A method for controlling a lidar, wherein the lidar comprises the lidar according to claim 10, and the method comprises:

obtaining to-be-processed point cloud data, wherein the to-be-processed point cloud data comprises a first distance and a first light intensity, the first distance is a distance between a first spatial point and the lidar, the first distance is determined based on time at which the first emitting module in the laser emitting apparatus emits a second laser beam and time at which the laser receiving module receives a first echo, the first light intensity is a light intensity of the first echo, and the first spatial point is located in a light spot of the second laser beam;
obtaining related point cloud data, wherein the related point cloud data comprises first adjacent point cloud data, the first adjacent point cloud data comprises a second distance and a second light intensity, the second distance is a distance between a second spatial point and the lidar, the second distance is determined based on sending time of the second laser beam and time at which the laser receiving module receives a second echo, the second light intensity is a light intensity of the second echo, and the second spatial point is located in a light spot of a third laser beam; and
determining a target point cloud data set of the lidar based on the to-be-processed point cloud data and the related point cloud data, wherein when a difference between the first light intensity and an estimated crosstalk light intensity is less than a light intensity threshold, the target point cloud data set does not comprise the to-be-processed point cloud data, and the estimated crosstalk light intensity is associated with the first distance, the first light intensity, the light intensity in the related point cloud data, and the distance in the related point cloud data.

**12.** The method according to claim 11, wherein the related point cloud data further comprises second adjacent point cloud data, the second adjacent point cloud data comprises a third distance and a third light intensity, the third distance is a distance between a third spatial point and the lidar, the third distance is determined based on the sending time of the second laser beam and time at which the laser receiving module receives a third echo, the third light intensity is a light intensity of the third echo, and the third spatial point is located in a light spot of a fourth laser beam.

**13.** The method according to claim 11 or 12, wherein the related point cloud data further comprises crosstalk point cloud data, the crosstalk point cloud data comprises a fourth distance and a fourth light intensity, the fourth distance is a distance between a fourth spatial point and the lidar, the fourth distance is determined based on sending time of the third laser beam and time at which the laser receiving module receives a fourth echo, the fourth light intensity is a light intensity of the fourth echo, and the fourth spatial point is located in the light spot of the second laser beam.

**14.** The method according to claim 13, wherein that the estimated crosstalk light intensity is associated with the first distance, the first light intensity, the light intensity in the related point cloud data, and the distance in the related point cloud data comprises:
the estimated crosstalk light intensity is a weighted sum of light intensities in the related point cloud data, and a weight of the light intensity in the related point cloud data is associated with a difference between the distance in the related point cloud data and the first distance.

**15.** The method according to claim 14, wherein the estimated crosstalk light intensity and the light intensity in the related point cloud data satisfy the following formula:

$$\lambda^{/} = \varphi_1 \times \lambda_1 + \varphi_2 \times \lambda_2 + \omega \times \lambda_{\omega},$$

wherein
$\lambda^{/}$ indicates the estimated crosstalk light intensity, $\varphi_1$ indicates a weight of the light intensity in the first adjacent point cloud data, $\lambda_1$ indicates the second light intensity, $\varphi_2$ indicates a weight of the light intensity in the second adjacent point cloud data, $\lambda_2$ indicates the third light intensity, $\omega$ indicates a weight of the light intensity in the crosstalk point cloud data, and $\lambda_{\omega}$ indicates the fourth light intensity.

**16.** The method according to any one of claims 11 to 15, wherein the method further comprises:

controlling the first emitting module in the laser emitting apparatus to emit the first laser beam and the second laser beam in a first time period;
controlling the second emitting module in the laser emitting apparatus to emit the third laser beam and the fourth laser beam in a second time period; and
controlling the laser receiving module to receive an echo, wherein
obtaining the to-be-processed point cloud data and obtaining the related point cloud data comprise:

receiving echo information, wherein the echo information is determined by the laser receiving module based on the received echo, the echo information is used to generate a point cloud data set, and the point cloud data set comprises a plurality of pieces of point cloud data; and

obtaining the to-be-processed point cloud data and the related point cloud data from the plurality of pieces of point cloud data.

17. An apparatus for controlling a lidar, wherein the apparatus comprises modules configured to implement the method according to any one of claims 11 to 16.

18. An apparatus for controlling a lidar, wherein the apparatus comprises a memory and a processor;

the memory is configured to store program instructions; and

the processor is configured to invoke the program instructions in the memory, to perform the method according to any one of claims 11 to 16.

19. A computer-readable storage medium, wherein the computer-readable storage medium stores program code used by a computer for execution, and the program code comprises instructions used for implementing the method according to any one of claims 11 to 16.

20. A computer program product, wherein the computer program product comprises instructions, and when the instructions are executed, a computer is enabled to perform the method according to any one of claims 11 to 16.

Lidar 100

FIG. 1

FIG. 2

Lidar 300

```
┌─────────────────────────────────┐        ┌──────────────┐        ┌──────────────────────┐
│ Laser emitting apparatus 310    │        │              │        │  Laser receiving     │
│                                 │        │              │        │  module 320          │
│  ┌───────────────────────────┐  │        │              │        └──────────────────────┘
│  │  First emitting module    │  │        │              │
│  │         3101              │  │        │              │
│  └───────────────────────────┘  │        │              │        ┌──────────────────────┐
│                                 │────────│ Control unit │        │ Signal processing unit│
│  ┌───────────────────────────┐  │        │     350      │────────│         330          │
│  │ Second emitting module    │  │        │              │        └──────────────────────┘
│  │         3102              │  │        │              │
│  └───────────────────────────┘  │        │              │
│                                 │        │              │        ┌──────────────────────┐
│  ┌───────────────────────────┐  │        │              │        │  Sensor system 340   │
│  │  Optical module 3103      │  │        │              │        └──────────────────────┘
│  └───────────────────────────┘  │        │              │
└─────────────────────────────────┘        └──────────────┘
```

FIG. 3

FIG. 4

FIG. 5

FIG. 6

FIG. 7

Obtain to-be-processed point cloud data from a first point cloud data set, where a location indicated by the to-be-processed point cloud data is located in a first ideal lighting area of a first emitting module — S801

Obtain adjacent point cloud data of the to-be-processed point cloud data from the first point cloud data set, where a location indicated by the adjacent point cloud data is located in a first ideal non-lighting area of the first emitting module, and the first ideal non-lighting area is adjacent to the first ideal lighting area — S802

Obtain crosstalk point cloud data of the to-be-processed point cloud data from a second point cloud data set, where a location indicated by the crosstalk point cloud data is located in a second ideal non-lighting area of a second emitting module, and the second ideal non-lighting area overlaps the first ideal lighting area — S803

Determine a first light intensity weight based on a distance indicated by the to-be-processed point cloud data and a distance indicated by the adjacent point cloud data, where the first light intensity weight is a weight of a light intensity indicated by the adjacent point cloud data — S804

Determine a second light intensity weight based on the distance indicated by the to-be-processed point cloud data and a distance indicated by the crosstalk point cloud data, where the second light intensity weight is a weight of a light intensity indicated by the crosstalk point cloud data — S805

Determine, based on the first light intensity weight, the second light intensity weight, the light intensity indicated by the adjacent point cloud data, and the light intensity indicated by the crosstalk point cloud data, an estimated crosstalk light intensity at the location indicated by the to-be-processed point cloud data — S806

Determine, based on the estimated crosstalk light intensity and a light intensity indicated by the to-be-processed point cloud data, whether a target point cloud data set includes the to-be-processed point cloud data — S807

FIG. 8

Apparatus 900 for controlling a lidar

Obtaining module 901

Determining module 902

FIG. 9

Apparatus 1000 for controlling a lidar

Processor
1001

Interface
circuit 1002

Memory 1003

FIG. 10

## INTERNATIONAL SEARCH REPORT

| International application No. |
| --- |
| **PCT/CN2023/094627** |

**A.    CLASSIFICATION OF SUBJECT MATTER**

G01S7/484(2006.01)i

According to International Patent Classification (IPC) or to both national classification and IPC

**B.    FIELDS SEARCHED**

Minimum documentation searched (classification system followed by classification symbols)

IPC: G01S

Documentation searched other than minimum documentation to the extent that such documents are included in the fields searched

Electronic data base consulted during the international search (name of data base and, where practicable, search terms used)

CNTXT; ENTXT; CNKI; VEN; USTXT; EPTXT; WOTXT; IEEE: 激光, 第二, 发射, 光斑, 光点, 连续, 间断, 间隙, 重叠, 重合, 离散, 分离, 堆叠, 交叠, 串扰, 点云, 距离, 光强, 强度, 阈值, laser, lidar, second, emit+, spot?, continuous, discrete, overlap, crosstalk, point cloud, distance, range, strength, intensity, threshold

**C.    DOCUMENTS CONSIDERED TO BE RELEVANT**

| Category* | Citation of document, with indication, where appropriate, of the relevant passages | Relevant to claim No. |
| --- | --- | --- |
| X | CN 114624722 A (NINGBO FEIXIN ELECTRONIC TECHNOLOGY CO., LTD.) 14 June 2022 (2022-06-14) description, paragraphs [0005]-[0039], and figure 5 | 1-9 |
| Y | CN 114624722 A (NINGBO FEIXIN ELECTRONIC TECHNOLOGY CO., LTD.) 14 June 2022 (2022-06-14) description, paragraphs [0005]-[0039], and figure 5 | 10 |
| Y | WO 2023044688 A1 (HUAWEI TECHNOLOGIES CO., LTD.) 30 March 2023 (2023-03-30) description, pages 13-35 | 10 |
| A | CN 114096883 A (OUSTER INC.) 25 February 2022 (2022-02-25) entire document | 1-20 |
| A | CN 113176555 A (SHANGHAI HESAI TECHNOLOGY CO., LTD.) 27 July 2021 (2021-07-27) entire document | 1-20 |

☑ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **23 November 2023** | **24 November 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**EP 4 700 429 A1**

**INTERNATIONAL SEARCH REPORT**

International application No.

**PCT/CN2023/094627**

### C. DOCUMENTS CONSIDERED TO BE RELEVANT

| Category* | Citation of document, with indication, where appropriate, of the relevant passages | Relevant to claim No. |
|---|---|---|
| A | CN 107153182 A (SUTENG INNOVATION TECHNOLOGY CO., LTD.) 12 September 2017 (2017-09-12)<br>entire document | 1-20 |

Form PCT/ISA/210 (second sheet) (July 2022)

29

**INTERNATIONAL SEARCH REPORT**
Information on patent family members

| International application No. |
| --- |
| **PCT/CN2023/094627** |

| Patent document cited in search report | | | Publication date (day/month/year) | Patent family member(s) | Publication date (day/month/year) |
| --- | --- | --- | --- | --- | --- |
| CN | 114624722 | A | 14 June 2022 | None | |
| WO | 2023044688 | A1 | 30 March 2023 | None | |
| CN | 114096883 | A | 25 February 2022 | None | |
| CN | 113176555 | A | 27 July 2021 | None | |
| CN | 107153182 | A | 12 September 2017 | None | |

Form PCT/ISA/210 (patent family annex) (July 2022)